# EUROPEAN PATENT APPLICATION

(11) **EP 4 661 109 A1**
(43) Date of publication of application: **10.12.2025**
(21) Application number: 24910540.4
(22) Date of filing: 29.11.2024
(51) Int. Cl.: H01M 4/525, H01M 10/0525

(54) **HIGH-NICKEL POSITIVE ELECTRODE MATERIAL, AND PREPARATION METHOD THEREFOR AND USE THEREOF**

(30) Priority: 29.12.2023 CN 202311870331
(71) Applicant: Ningbo Ronbay New Energy Technology Co., Ltd., Yuyao Ningbo, Zhejiang 315402 (CN)
(72) Inventor: WU, Gu, Ningbo, Zhejiang 315402 (CN); LIN, Zheqi, Ningbo, Zhejiang 315402 (CN); HUANG, Xiaoxiao, Ningbo, Zhejiang 315402 (CN); YU, Jian, Ningbo, Zhejiang 315402 (CN)
(74) Representative: Bandpay & Greuter
(86) International application number: PCT/CN2024/135961
(87) International publication number: WO 2025/139608

(57) **Abstract**

Provided in the present application are a high-nickel positive electrode material, and a preparation method and a use thereof. The high-nickel positive electrode material of the present application is a secondary particle formed by aggregation of primary crystal grains, and a grain boundary is included between adjacent primary crystal grains. A mass ratio of cobalt element to nickel element at the grain boundary in a surface layer of the secondary particle is A, the mass ratio of cobalt element to nickel element at the grain boundary in an interior of the secondary particle is B, and the mass ratio of cobalt element to nickel element of the primary crystal grains in the surface layer of the secondary particle is C, where A is greater than B and A is greater than C. The high-nickel positive electrode material of the present application has a structure of cobalt-rich grain boundary in a surface layer of the secondary particle, which may enhance the structural stability of the material and reduce side reactions with the electrolyte, thereby enabling the battery to have excellent discharge capacity, Coulombic efficiency and capacity retention rate.

## Description

This application claims priority to Chinese Patent Application No. 202311870331.6 filed with the China National Intellectual Property Administration on December 29, 2023 and entitled "HIGH-NICKEL POSITIVE ELECTRODE MATERIAL, AND PREPARATION METHOD AND APPLICATION THEREOF", which is hereby incorporated by reference in its entirety.

### TECHNICAL FIELD

The present application relates to the field of lithium-ion batteries and relates to a high-nickel positive electrode material, and a preparation method and an application thereof.

### BACKGROUND

Driven by the national new energy policy, China's new energy-related industries have developed rapidly. Lithium-ion batteries have been widely used due to their advantages such as high operating voltage, high energy density and long cycle life.

Positive electrode material is an important component of lithium-ion batteries and a key factor in determining the performance and cost of lithium-ion batteries. Ternary positive electrode material is a lithium metal oxide containing at least two elements, nickel and cobalt, which has good ternary synergistic effect, and exhibits advantages such as high specific capacity, good cycle performance, low cost and low toxicity, being a positive electrode material with great application value. In ternary positive electrode materials, nickel is a main redox reaction element. By increasing the nickel content, the specific capacity of the ternary material can be effectively improved. Cobalt element can stabilize the layered structure of materials, reduce cation mixing, and facilitate the transmission of lithium ions and electrons. With the scarcity of cobalt resources, the trend of high nickel and low cobalt contents in ternary positive electrode materials is becoming increasingly evident. However, as the nickel content increases and the cobalt content decreases, the stability of the positive electrode material deteriorates and the side reactions between the positive electrode material and the electrolyte become more severe, resulting in a deterioration in the capacity, cycle performance and Coulombic efficiency of lithium-ion batteries.

### SUMMARY

The present application provides a high-nickel positive electrode material having a cobalt-rich grain boundary structure in a surface layer of secondary particle, which may enhance the structural stability of the material and reduce side reactions of the material with the electrolyte, thereby enabling the battery to have excellent discharge capacity, Coulombic efficiency and capacity retention rate.

The present application also provides a method for preparing a high-nickel positive electrode material. In the method, a mixed system of a high-nickel positive electrode material precursor, a lithium source and a cobalt source is pre-sintered to form a lithium cobalt oxide on the surface of the precursor particle, and the lithium cobalt oxide is injected into the grain boundary under the fluxing of the lithium source, and the diffusion of cobalt elements into the core of the secondary particle and the interior of the crystal grains is avoided by controlling the subsequent sintering conditions, thereby preparing the high-nickel positive electrode material rich in cobalt at the grain boundary in the surface layer of secondary particle.

The present application also provides a positive electrode sheet. Since the positive electrode sheet includes the above-mentioned high-nickel positive electrode material, the positive electrode sheet has good stability and is not prone to performing side reactions with the electrolyte.

The present application also provides a lithium-ion battery. Since the lithium-ion battery includes the above-mentioned positive electrode sheet, the lithium-ion battery has excellent discharge capacity, Coulombic efficiency and capacity retention rate.

In a first aspect, the present application provides a high-nickel positive electrode material, and the high-nickel positive electrode material is a secondary particle formed by aggregation of primary crystal grains, and a grain boundary is included between adjacent primary crystal grains;
a mass ratio of cobalt element to nickel element at the grain boundary in a surface layer of the secondary particle is A, a mass ratio of cobalt element to nickel element at the grain boundary in a core of the secondary particle is B, and a mass ratio of cobalt element to nickel element of the primary crystal grains in the surface layer of the secondary particle is C, where A is greater than B, and A is greater than C.

For the high-nickel positive electrode material as described above, the surface layer of the secondary particle includes a first doping element, and the first doping element is selected from at least one of metal elements capable of achieving a valence of +5 or higher.

For the high-nickel positive electrode material as described above, the first doping element is selected from at least one of Ta, Nb, Mo, or W.

For the high-nickel positive electrode material as described above, a concentration of the first doping element at the grain boundary in the surface layer of the secondary particle is greater than a concentration of the first doping element of the primary crystal grains in the surface layer of the secondary particle.

For the high-nickel positive electrode material as described above, the secondary particle includes a second doping element, and the second doping element is selected from at least one of Zr, Al, Ti, Mg, Sc, Y, La, Sr, or B.

For the high-nickel positive electrode material as described above, a surface of the secondary particle is coated with a coating layer, and the coating layer includes at least one element of B, Al, Ce, Zr, Ti, or Si.

For the high-nickel positive electrode material as described above, the high-nickel positive electrode material has a chemical composition of LiₙNiₓCo_{y}K_{z}MₐN_{b}O₂, where 0.95<n<1.1, 0.85≤Ni<1, 0<y≤0.15, 0≤z≤0.15, 0<a≤0.05, 0<b≤0.05; K is selected from Mn or Al; M is selected from at least one of Al, Zr, Y, Ti, Sr, Ce, La, Mg, B, Si, or Sc; N is selected from at least one of Ta, Nb, Mo, W, Sb, Bi, or V.

A second aspect of the present application provides a method for preparing the high-nickel positive electrode material as described above, including the following steps:
1) performing a pre-sintering on a mixed system including a high-nickel positive electrode material precursor, a lithium source and a cobalt source under an oxygen-containing atmosphere to obtain a pre-sintered material;
   where a pre-sintering temperature is 400-600°C and a pre-sintering time is 4-10h;
2) performing a primary sintering on a mixed system including the pre-sintered material and a compound of a first doping element under the oxygen-containing atmosphere to obtain a primary sintered material;
   where the first doping element is selected from at least one of the metal elements capable of achieving valence of +5 or higher; and
   a primary sintering temperature is 650-800°C, and a primary sintering time is 8-16h;
3) performing a secondary sintering on the primary sintered product under the oxygen-containing atmosphere to obtain a high-nickel positive electrode material.

For the preparation method as described above, in step 2), the mixed system further includes a compound of a second doping element, and the second doping element is selected from at least one of Zr, Al, Ti, Mg, Sc, Y, La, Sr, or B.

For the preparation method as described above, in step 3), the secondary sintering includes: sintering a mixed system of the primary sintered product and a coating agent at 200-500°C for 8-16h;
where the coating agent is selected from compounds containing a coating element, and the coating element is selected from at least one of B, Al, Ce, Zr, Ti, or Si.

A third aspect of the present application provides a positive electrode sheet, including the high-nickel positive electrode material as described above.

A fourth aspect of the present application provides a lithium-ion battery, including the positive electrode sheet as described above.

The implementation of the present application has at least the following advantages.
1) In the high-nickel positive electrode material of the present application, the secondary particle is formed by the aggregation of a plurality of primary crystal grains, and the grain boundary in the surface layer of the secondary particle is rich in cobalt, which is specifically manifested by that the mass ratio of cobalt element to nickel element at the grain boundary in the surface layer of the secondary particle A is greater than the mass ratio of cobalt element to nickel element of the primary grains in the surface layer of the secondary particle C and the mass ratio of cobalt element to nickel element at the grain boundary in the core of the secondary particle B, which can significantly improve the structural stability of the material, reduce the side reactions between the material and the electrolyte, improve the Coulombic efficiency and cycle life, maintain the layered structure during the charge and discharge process to ensure the transmission channel for lithium ions, and improve the rate performance. Moreover, the cobalt enrichment at the grain boundary in the surface layer of the secondary particle can effectively reduce the overall cobalt content of the secondary particle, thereby avoiding reduced capacity of the positive electrode material caused by the overall cobalt concentration of the secondary particle being too high, and improving the energy density of the positive electrode material.
2) In the preparation method of the high-nickel positive electrode material provided in the present application, the mixed system of the high-nickel positive electrode material precursor, lithium source and cobalt source is pre-sintered to ensure that the cobalt source and the lithium source are fully contacted and reacted with each other to form a lithium cobalt oxide on the surface of the precursor particles, and the lithium cobalt oxide is injected into the grain boundary under the fluxing of lithium source. During the primary sintering process, a high-valent metal element is added and doped into the grain boundary in the surface layer. The stronger metal-oxygen bond of the high-valent metal inhibits the diffusion of Co elements from the grain boundary to the primary crystal grains and the diffusion of Co elements between the primary crystal grains, thereby maintaining the structure that the grain boundary in the surface layer is rich in cobalt, and the cobalt concentration at the grain boundary in the surface layer is greater than that of the primary crystal grains in the surface layer. In addition, the high-valent element doped into the surface layer of the secondary particle can also inhibit oxygen evolution, improve the storage performance of the positive electrode material, and reduce gas production.
3) Since the high-nickel positive electrode material of the present application has good structural stability and can reduce the side reaction between the material and the electrolyte, the high-nickel positive electrode material is applied to the positive electrode sheet and further applied to the lithium-ion battery, which can enable the lithium-ion battery to have excellent discharge capacity, Coulombic efficiency and capacity retention rate.

### BRIEF DESCRIPTION OF DRAWINGS

In order to more clearly illustrate the technical solutions in the embodiments of the present application or in the prior art, a brief introduction to the drawings required for describing the embodiments or the prior art will be given below. It is obvious that the drawings described below are some embodiments of the present application. For those skilled in the art, other drawings can be obtained based on these drawings without paying any creative work.

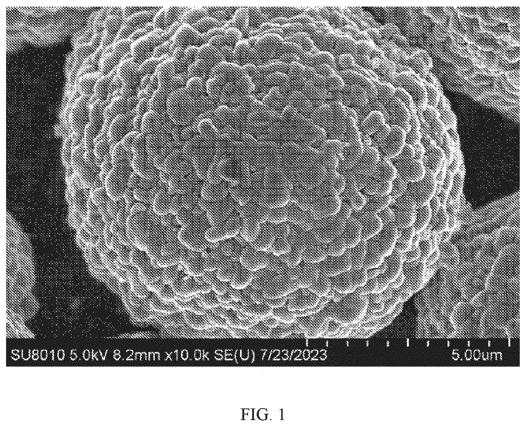

FIG. 1 is an SEM image of a high-nickel positive electrode material of Embodiment 1 of the present application.

### DESCRIPTION OF EMBODIMENTS

In order to make the purposes, technical solutions and advantages of the present application clearer, the technical solutions in the embodiments of the present application will be clearly and completely described below in combination with the embodiments of the present application. Obviously, the described embodiments are only part of the embodiments of the present application, rather than all of them. Based on the embodiments in the present application, all other embodiments obtained by those skilled in the art without making any creative work shall fall within the scope of protection of the present application.

A first aspect of the present application provides a high-nickel positive electrode material, and the high-nickel positive electrode material is a secondary particle formed by aggregation of primary crystal grains, and a grain boundary is included between adjacent primary crystal grains;
a mass ratio of cobalt element to nickel element at a grain boundary in a surface layer of the secondary particle is A, a mass ratio of cobalt element to nickel element at a grain boundary in a core of the secondary particle is B, and a mass ratio of cobalt element to nickel element of the primary crystal grains in the surface layer of the secondary particle is C, where A is greater than B and A is greater than C.

When A, B, and C satisfy the above relationship, the high-nickel positive electrode material has a cobalt-rich surface layer structure, especially cobalt-rich grain boundary in the surface layer of the secondary particle, which can significantly improve the structural stability of the material, reduce the side reaction between the material and the electrolyte, improve the Coulombic efficiency and cycle life, and maintain a layered structure during the charge-discharge process to ensure the transmission channel for lithium ions and improve the rate performance. Moreover, cobalt enrichment at the grain boundary in the surface layer of the secondary particle can effectively reduce the overall cobalt content of the secondary particle, thereby avoiding reduced capacity of the positive electrode material due to the overall cobalt element concentration of the secondary particle being too high, and improving the energy density of the positive electrode material.

In an optional implementation, the surface layer of the secondary particle also includes a first doping element, and the first doping element is selected from at least one of metal elements capable of achieving a valence of +5 or higher. For example, the doping element N may be selected from metal elements such as Ta, Nb, Mo, W, Bi, Sb, and V. Doping high-valence metal element in the surface layer of the secondary particle can prevent cobalt element on the surface of the secondary particle from diffusing into the interior of the material and avoid cobalt element at the grain boundary from diffusing to the primary crystal grains, thereby retaining the structure of cobalt-rich grain boundary in the surface layer of the secondary particle and further ensuring the stability of the high-nickel positive electrode material.

Further, the first doping element is selected from at least one of Ta, Nb, Mo, or W, and the doping of these elements can further improve the structural stability of the high-nickel positive electrode material.

Further, a concentration of the first doping element at the grain boundary in the surface layer of the secondary particle is greater than the concentration of the first doping element in the primary crystal grains in the surface layer. The enrichment of the first doping element at the grain boundary in the surface layer can effectively prevent the diffusion of cobalt element during the sintering process.

In the present application, the mass content of cobalt element and nickel element at the grain boundary in the surface layer of the secondary particle, the mass content of cobalt element and nickel element at the grain boundary in the core of the secondary particle, the mass content of cobalt element and nickel element in the primary crystal grains in the surface layer of the secondary particle, the mass content of the first doping element at the grain boundary in the surface layer of the secondary particle, and the mass content of the first doping element in the primary crystal grains in the surface layer of the secondary particle can all be measured using EDS (X-ray energy dispersive spectrometer) by taking samples from the corresponding regions.

In an optional implementation, the secondary particle also includes a second doping element, and the second doping element is selected from at least one of Zr, Al, Ti, Mg, Sc, Y, La, Sr, or B. By doping the second doping element, the specific capacity, stability, and rate performance of the positive electrode material can be further improved.

The high-nickel positive electrode material of the present application can be directly composed of secondary particles, or obtained by further coating with a coating layer on the surface of the secondary particle, where the coating layer includes at least one element of B, Al, Ce, Zr, Ti, or Si. The surface of the secondary particle is coated with the above element, which can further prevent the positive electrode material from contacting with the electrolyte, thereby reducing the side reaction between the positive electrode active material and the electrolyte.

In an optional implementation, the chemical composition of the high-nickel positive electrode material is LiₙNiₓCo_{y}K_{z}MₐN_{b}O₂, where 0.95<n<1.1, 0.85≤Ni<1, 0<y≤0.15, 0≤z≤0.15, 0<a≤0.15, 0<b≤0.05; K is selected from Mn or Al; M is selected from at least one of Al, Zr, Y, Ti, Sr, Ce, La, Mg, B, Si, or Sc; N is selected from at least one of Ta, Nb, Mo, W, Sb, Bi, or V.

A second aspect of the present application provides a method for preparing the above-mentioned high-nickel positive electrode material, including the following steps:
1) performing a pre-sintering on a mixed system including a high-nickel positive electrode material precursor, a lithium source and a cobalt source under an oxygen-containing atmosphere to obtain a pre-sintered material;
   where, a pre-sintering temperature is 400-600°C and a pre-sintering time is 4-10h;
2) performing a primary sintering on a mixed system including the pre-sintered material and a compound of a first doping element under the oxygen-containing atmosphere to obtain a primary sintered material;
   where, the first doping element is selected from at least one of the metal elements capable of achieving a valence of +5 or higher; and a primary sintering temperature is 650-800°C, and a primary sintering time is 8-16h;
3) performing a secondary sintering on the primary sintered product under the oxygen-containing atmosphere to obtain a high-nickel positive electrode material.

In step 1), by pre-sintering the mixed system including the high-nickel positive electrode material precursor, the lithium source and the cobalt source at a relatively low temperature, lithium cobalt oxide can be formed on the surface of the precursor under lithium-rich conditions, and the lithium cobalt oxide is injected into the grain boundary under the fluxing of the lithium source. Moreover, the relatively low temperature can avoid the diffusion of the cobalt element into the interior of the particles, thereby maintaining the cobalt-rich structure of the surface of the secondary particle.

In step 2), by performing the primary sintering on the mixed system including the pre-sintered material and the compound of the first doping element, on the one hand, the first doping element with a high valence can form a protective layer between the grain boundaries, and the stronger metal-oxygen bond of the high-valence metal inhibits the diffusion of cobalt element from the grain boundary to the interior of the primary grains and the core of the second particle; on the other hand, after pre-sintering, the time of the primary sintering can be relatively shortened, thereby obtaining the high-nickel positive electrode material with cobalt-rich grain boundary in the surface layer of the secondary particle.

The first doping element includes but is not limited to metal elements having a valence of +5 or higher, such as Ta, Nb, Mo, W, Bi, Sb, and V; the compound of the first doping element refers to a compound containing the first doping element, including but not limited to oxides, hydroxides, chlorides, sulfates, nitrates, acetates, carbonates of the first doping element, and the like.

In the above preparation method, the high-nickel positive electrode material precursor may be in the form of hydroxide, oxide or carbonate. For example, when the high-nickel positive electrode material is a nickel-cobalt-manganese ternary material, its precursor may be the hydroxide, oxide or carbonate of nickel, cobalt and manganese. The source of the high-nickel positive electrode material precursor is not limited in the present application, which can be either commercially purchased or prepared using conventional methods in the art.

Further, in step 1), the lithium source is selected from LiOH, and the melting effect of lithium hydroxide is conducive to the smooth and uniform coating of lithium cobalt oxide on the surface of secondary particles, thereby improving the structural stability of the material.

The type of cobalt source is not specifically limited in the present application, which may be selected from the cobalt sources conventionally used in the art, including but not limited to at least one of CoO, Co₂O₃, Co₃O₄, Co(OH)₂, CoOOH, CoCO₃, CoSO₄, Co(NO₃)₂, or cobalt acetate.

In step 1), the oxygen-containing atmosphere refers to an atmosphere containing oxygen. Where, the oxygen-containing atmosphere may be a pure oxygen atmosphere, or an air atmosphere, preferably a pure oxygen atmosphere.

In step 2), after obtaining the primary sintered material, the processes of washing the primary sintered material with water and drying the primary sintered material are also included, where the washing with water can wash away the residual alkali on the surface of the primary sintered material, and the drying can remove the moisture. The conditions for washing with water and drying are not particularly limited in the present application, and the conditions conventionally used in the art may be adopted.

In step 3), the primary sintered material is subjected to the secondary sintering to remove the bound water formed by combining with the surface of the material and the internal moisture, thereby avoiding swelling of the battery during use. Where, the secondary sintering may be completed by sintering at 200-500°C for 8-16h.

In an optional implementation, when the high-nickel positive electrode material also includes a second doping element, in step 2), a compound of the second doping element is further added to the mixed system, and then the primary sintering is performed to complete the doping of the second doping element. The second doping element may be selected from one or more of Zr, Al, Ti, Mg, Sc, Y, La, Sr, or B, and the compound containing the second doping element may be selected from oxides, hydroxides, chlorides, sulfates, nitrates, acetates, carbonates of the second doping element, and the like.

In an optional implementation, when the surface of the secondary particle of the high-nickel positive electrode material is also coated with a coating layer, in step 3), a coating agent is further added to the mixed system, and then a secondary sintering is performed to complete the coating of the surface of the secondary particle. Where, the coating agent is a compound containing a coating element, and the coating element is selected from at least one of B, Al, Ce, Zr, Ti, or Si, and the compound containing the coating element may be selected from oxides, hydroxides, chlorides, sulfates, nitrates, acetates, carbonates of the coating element, and the like.

A third aspect of the present application provides a positive electrode sheet, including the high-nickel positive electrode material as described above. It can be understood that the positive electrode sheet includes a positive electrode current collector and a positive electrode active layer arranged on at least one functional surface of the positive electrode current collector, where the positive electrode active layer includes the high-nickel positive electrode material as described above.

The positive electrode current collector is not particularly limited in the present application, and current collectors which are conventionally used in the art and commercially available, such as aluminum foil, can be used.

The positive electrode active layer of the present application includes the high-nickel positive electrode material as described above, which means that the high-nickel positive electrode material as described above is used as the positive electrode active material in the positive electrode active layer; and in addition to the positive electrode active material, the positive electrode active layer may also include ingredients such as a conductive agent and an adhesive agent. Where, the conductive agent and the adhesive agent may be those conventionally used in the art, which will not be repeated here.

A fourth aspect of the present application provides a lithium-ion battery, including the positive electrode sheet as described above. Since the high-nickel positive electrode material provided by the present application is included in the above-mentioned positive electrode sheet, and, such material has the advantages of good stability and low susceptibility to side reactions with the electrolyte, so the battery has excellent discharge capacity, Coulombic efficiency and capacity retention rate.

In addition to a positive electrode sheet, the lithium-ion battery of the present application also includes a separator, a negative electrode sheet and an electrolyte. Where, the composition of the negative electrode sheet may refer to conventional negative electrode sheets in the art, and will not be described in detail here. The separator may also be a separator commonly used in the art, such as PP film, PE film, etc.

The lithium-ion battery of the present application may be prepared by conventional methods in the art. For example, the positive electrode sheet, the separator and the negative electrode sheet may be stacked in sequence, and then subjected to a lamination or winding process to obtain a battery cell, followed by baking, electrolyte injection, formation, packaging and other processes to obtain the above-mentioned lithium-ion battery.

In the following, the high-nickel positive electrode material and its preparation method provided in the present application will be further described in detail through specific examples.

Unless otherwise specified, the reagents, materials and instruments used in the following examples are all conventional reagents, conventional materials and conventional instruments in the art and can be obtained commercially, and the reagents involved can also be synthesized by conventional methods in the art.

### Example 1

The chemical composition of the high-nickel positive electrode material of the present example is Li_{1.01}Ni_{0.915}Co_{0.056}Mn_{0.029}Mo_{0.002}Zr_{0.002}Sr_{0.001}Y_{0.001}B_{0.01}Al_{0.004}Ti_{0.002}O₂, and its preparation method includes the following steps:
1) mixing the hydroxide precursor of NCM9253, LiOH, and Co₂O₃ at a molar ratio of 1:1.05:0.004 at 800rpm for 30min, then heating to 550°C at 2°C/min under an oxygen atmosphere and maintaining for 8h to obtain a pre-sintered material;
2) mixing the pre-sintered material with ammonium molybdate, ZrO₂, SrO, and Y₂O₃ at a molar ratio of 1:0.002:0.002:0.001:0.0005 at 800rpm, heating to 750°C at 5°C/min under the oxygen atmosphere, and maintaining for 12h to obtain a primary sintered material;
3) washing the primary sintered material with deionized water and then drying it in vacuum at 120°C to obtain a water-washed and dried material;
4) mixing the water-washed and dried material with a coating agent H₃BO₃, Al₂O₃, and TiO₂ at a molar ratio of 1:0.01:0.002:0.002 at 800rpm for 30min, and heating to 300°C at 2°C/min under the oxygen atmosphere and maintaining for 10h to obtain a high-nickel positive electrode material.

### Example 2

The chemical composition of the high-nickel positive electrode material of the present example is Li_{1.015}Ni_{0.933}Co_{0.048}Mn_{0.019}W_{0.001}Zr_{0.002}Al_{0.002}Mg_{0.002}Y_{0.001}B_{0.02}Ti_{0.001}O₂, and its preparation method includes the following steps:
1) mixing the hydroxide precursor of NCM9442, LiOH, and Co(OH)₂ at a molar ratio of 1:1.05:0.01 at 800rpm for 30min, heating to 500°C at 2°C/min under an oxygen atmosphere, and maintaining for 8h to obtain a pre-sintered material;
2) mixing the pre-sintered material with WO₃, ZrO₂, Al(OH)₃, MgCO₃, Y₂O₃ at a molar ratio of 1:0.001:0.002:0.003:0.002:0.0005 at 800rpm, heating to 750°C at 5°C/min under the oxygen atmosphere, and maintaining for 12h to obtain a primary sintered material;
3) washing the primary sintered material with deionized water and then drying it in vacuum at 120°C to obtain a water-washed and dried material;
4) mixing the water-washed and dried material with the coating agent B₂O₃, Al₂O₃, and TiO₂ at a molar ratio of 1:0.01:0.0015:0.001 at 800rpm for 30min, and heating to 400°C at 2°C/min under the oxygen atmosphere and maintaining for 12h to obtain a high-nickel positive electrode material.

### Example 3

The chemical composition of the high-nickel positive electrode material of the present example is Li_{1.01}Ni_{0.923}Co_{0.048}Mn_{0.020}Ta_{0.002}Zr_{0.002}Ti_{0.000}Mg_{0.001}Y_{0.001}B_{0.01}Al_{0.004}O₂, and its preparation method includes the following steps:
1) mixing the hydroxide precursor of NCM9343, LiOH, and cobalt acetate at a molar ratio of 1:1.05:0.01 at 800rpm for 30min, then heating to 450°C at 2°C/min under an oxygen atmosphere and maintaining for 8h to obtain a pre-sintered material;
2) mixing the pre-sintered material with Ta₂O₅, ZrO₂, TiO₂, MgO, and Y₂O₃ at a molar ratio of 1:0.001:0.002:0.001:0.001:0.0005 at 800rpm, heating to 740°C at 5°C/min under the oxygen atmosphere, and maintaining for 12h to obtain a primary sintered material;
3) washing the primary sintered material with deionized water and then drying it in vacuum at 120°C to obtain a water-washed and dried material;
4) mixing the water-washed and dried material with the coating agent H₃BO₃ and Al₂O₃ at a molar ratio of 1:0.01:0.002 at 800rpm for 30min, and heating to 350°C at 2°C/min under the oxygen atmosphere and maintaining for 8h to obtain a high-nickel positive electrode material.

### Example 4

The chemical composition of the high-nickel positive electrode material of the present example is Li_{1.015}Ni_{0.905}Co_{0.046}Mn_{0.019}Mo_{0.001}Nb_{0.001}Zr_{0.002}Al_{0.002}Mg_{0.002}Y_{0.001}B_{0.02}Ti_{0.001}O₂, and its preparation method includes the following steps:
1) mixing the precursor of NCM9145, LiOH, CoSO₄, and CoCO₃ at a molar ratio of 1:1.05:0.004:0.004 at 800rpm for 30min, then heating to 550°C at 2°C/min under an oxygen atmosphere and maintaining for 8h to obtain a pre-sintered material;
2) mixing the pre-sintered material with MoO₃, Nb₂O₅, and ZrO₂ at a molar ratio of 1:0.0005:0.0005:0.002 at 800rpm, heating to 750°C at 5°C/min under the oxygen atmosphere, and maintaining for 12h to obtain a primary sintered material;
3) washing the primary sintered material with deionized water and then drying it in vacuum at 120°C to obtain a water-washed and dried material;
4) mixing the water-washed and dried material with B₂O₃, Al₂O₃, and TiO₂ at a molar ratio of 1:0.01:0.0015:0.001 at 800rpm for 30min, and heating to 400°C at 2°C/min under the oxygen atmosphere and maintaining for 12h to obtain a high-nickel positive electrode material.

### Example 5

The chemical composition of the high-nickel positive electrode material of the present example is Li_{1.01}Ni_{0.906}Co_{0.0477}Al_{0.038}Mo_{0.002}Zr_{0.002}Sr_{0.001}Y_{0.001}B_{0.01}Ti_{0.002}O₂, and its preparation method includes the following steps:
1) mixing the hydroxide precursor of NC9505, Al(OH)₃, LiOH, and Co₂O₃ at a molar ratio of 1:0.04:1.05:0.004 at 800rpm for 30min, then heating to 550°C at 2°C/min under an oxygen atmosphere and maintaining for 8h to obtain a pre-sintered material;
2) mixing the pre-sintered material with ammonium molybdate, ZrO₂, SrO, and Y₂O₃ at a molar ratio of 1:0.002:0.002:0.001:0.0005 at 800rpm, heating to 750°C at 5°C/min under the oxygen atmosphere, and maintaining for 12h to obtain a primary sintered material;
3) washing the primary sintered material with deionized water and then drying it in vacuum at 120°C to obtain a water-washed and dried material;
4) mixing the water-washed and dried material with the coating agent H₃BO₃, and TiO₂ at a molar ratio of 1:0.01:0.002 at 800rpm for 30min, and heating to 300°C at 2°C/min under the oxygen atmosphere and maintaining for 10h to obtain a high-nickel positive electrode material.

### Example 6

The chemical composition of the high-nickel positive electrode material of the present example is Li_{1.01}Ni_{0.915}Co_{0.056}Mno_{0.020}Sb_{0.002}Zr_{0.002}Sr_{0.001}Y_{0.001}B_{0.01}Al_{0.004}Ti_{0.002}O₂, and its preparation method includes the following steps:
1) mixing the hydroxide precursor of NCM9253, LiOH, and Co₂O₃ at a molar ratio of 1:1.05:0.004 at 800rpm for 30min, then heating to 550°C at 2°C/min under an oxygen atmosphere and maintaining for 8h to obtain a pre-sintered material;
2) mixing the pre-sintered material with Sb₂O₅, ZrO₂, SrO, and Y₂O₃ at a molar ratio of 1:0.001:0.002:0.001:0.0005 at 800rpm, heating to 750°C at 5°C/min under the oxygen atmosphere, and maintaining for 12h to obtain a primary sintered material;
3) washing the primary sintered material with deionized water and then drying it in vacuum at 120°C to obtain a water-washed and dried material;
4) mixing the water-washed and dried material with the coating agent H₃BO₃, Al₂O₃, and TiO₂ at a molar ratio of 1:0.01:0.002:0.002 at 800rpm for 30min, and heating to 300°C at 2°C/min under the oxygen atmosphere and maintaining for 10h to obtain a high-nickel positive electrode material.

### Comparative Example 1

The chemical composition of the high-nickel positive electrode material of the present comparative example is consistent with that of Example 1, and its preparation method includes the following steps:
1) mixing the precursor of NCM9253, LiOH, Co₂O₃, ammonium molybdate, ZrO₂, SrO, and Y₂O₃ at a molar ratio of 1:1.05:0.004:0.002:0.002:0.001:0.0005 at 800rpm, then heating to 750°C at 5°C/min under an oxygen atmosphere and maintaining for 12h to obtain a primary sintered material;
2) washing the primary sintered material with deionized water and then drying it in vacuum at 120°C to obtain a water-washed and dried material;
3) mixing the water-washed and dried material with the coating agent H₃BO₃, Al₂O₃, and TiO₂ at a molar ratio of 1:0.01:0.002:0.002 at 800rpm for 30min, and heating to 300°C at 2°C/min under the oxygen atmosphere and maintaining for 10h to obtain a high-nickel positive electrode material.

### Comparative Example 2

The chemical composition of the high-nickel positive electrode material of the present comparative example is Li_{1.01}Ni_{0.915}Co_{0.056}Mn_{0.020}Zr_{0.002}Sr_{0.001}Y_{0.001}B_{0.01}Al_{0.004}Tl_{0.002}O₂, and its preparation method includes the following steps:
1) mixing the hydroxide precursor of NCM9253, LiOH, and Co₂O₃ at a molar ratio of 1:1.05:0.004 at 800rpm for 30min, then heating to 550°C at 2°C/min under an oxygen atmosphere and maintaining for 8h to obtain a pre-sintered material;
2) mixing the pre-sintered material with ZrO₂, SrO, and Y₂O₃ at a molar ratio of 1:0.002:0.001:0.0005 at 800rpm, heating to 750°C at 5°C/min under the oxygen atmosphere, and maintaining for 12h to obtain a primary sintered material;
3) washing the primary sintered material with deionized water and then drying it in vacuum at 120°C to obtain a water-washed and dried material;
4) mixing the water-washed and dried material with the coating agent H₃BO₃, Al₂O₃, and TiO₂ at a molar ratio of 1:0.01:0.002:0.002 at 800rpm for 30min, and heating to 300°C at 2°C/min under the oxygen atmosphere and maintaining for 10h to obtain a high-nickel positive electrode material.

### Comparative Example 3

The chemical composition of the high-nickel positive electrode material of the present comparative example is consistent with that of Example 1, and its preparation method includes the following steps:
1) mixing the hydroxide precursor of NCM9253, LiOH, and Co₂O₃ at a molar ratio of 1:1.05:0.004 at 800rpm for 30min, then heating to 750°C at 2°C/min under an oxygen atmosphere and maintaining for 8h to obtain a pre-sintered material;
2) mixing the pre-sintered material with ammonium molybdate, ZrO₂, SrO, and Y₂O₃ at a molar ratio of 1:0.002:0.002:0.001:0.0005 at 800rpm, heating to 750°C at 5°C/min under the oxygen atmosphere, and maintaining for 12h to obtain a primary sintered material;
3) mixing the water-washed and dried material with the coating agent H₃BO₃, Al₂O₃, and TiO₂ at a molar ratio of 1:0.01:0.002:0.002 at 800rpm for 30min, and heating to 300°C at 2°C/min under the oxygen atmosphere and maintaining for 10h to obtain a high-nickel positive electrode material.

### Test Example

1. The high-nickel positive electrode material of Example 1 was characterized by SEM. FIG. 1 is an SEM image of the high-nickel positive electrode material of Example 1 of the present application. It can be seen from FIG.1 that the high-nickel positive electrode material of Example 1 is a secondary spherical particle formed by the aggregation of primary crystal grains.
2. The following parameters were measured for the high-nickel positive electrode materials obtained in the above Examples and Comparative Examples.

### 1) Mass ratio A of cobalt element to nickel element, and content of the first doping element at the grain boundary in the surface layer of the secondary particle

Determination method: SEM is used to observe the surface morphology of the samples, then the grain boundary is selected for EDS testing to obtain the contents of cobalt, nickel, and the first doping element, and the cobalt/nickel mass ratio A is calculated.

### 2) Mass ratio C of cobalt element to nickel element, and content of the first doping element in the primary crystal grains in the surface layer of the secondary particle

Determination method: SEM is used to observe the surface morphology of the sample, then the center of the primary crystal grain is selected for EDS testing to obtain the contents of cobalt, nickel, and the first doping element, and the cobalt/nickel mass ratio C is calculated.

### 3) Mass ratio B of cobalt to nickel at the grain boundary in the core of the secondary particle

Testing method: an argon ion beam is used to perform ion milling on the sample to obtain sliced positive electrode particles; SEM is used to observe the cross-section of the sample, and the grain boundary in the core of the secondary particle is selected for EDS testing to obtain the contents of cobalt, nickel, and the first doping element, and the cobalt/nickel mass ratio B is calculated.

The test results of the above parameters are listed in Table 1.

3. High-nickel positive electrode material, conductive agent Super-P, and adhesive agent PVDF are mixed at a mass ratio of 96.5:1.5:2, and then added into an NMP solvent. The mixture is mixed evenly to obtain a positive electrode slurry with a solid content of 30-40%. The positive electrode slurry is coated on the positive electrode current collector aluminum foil with an areal density of approximately 20mg/cm², and the positive electrode sheet is obtained by sequentially drying, punching, and rolling.

The above-mentioned positive electrode sheet, a PP separator, and a metal lithium sheet are stacked in sequence, and 1.0M LiPF₆ electrolyte is added to assemble into an LR2430 button battery. The obtained button battery is subjected to the following performance tests.

### 1) Discharge capacity

Determination method: at room temperature, the button battery is charged at a constant current of 0.2C to 4.25V, then charged at a constant voltage of 4.25V until a cut-off current is equal to 0.05C; after standing for 5min, the button battery is discharged at a constant current of 0.2C to 2.5V, and the discharge capacity of the battery is recorded. Where, 1C = 200mA/g.

### 2) Initial Coulombic efficiency

Determination method: at room temperature, the button battery is charged at a constant current of 0.2C to 4.25V, then charged at a constant voltage of 4.25V until a cut-off current is equal to 0.05C, and the charge capacity of the battery is recorded; after standing for 5min, the button battery is discharged at a constant current of 0.2C to 2.5V, and the discharge capacity of the battery is recorded. The discharge capacity/the charge capacity × 100% is an initial Coulombic efficiency. Where, 1C = 200mA/g.

The above-mentioned positive electrode sheet, a PP separator, and a graphite negative electrode sheet are stacked in sequence and wound to obtain a battery cell. The battery cell is packaged into an aluminum plastic film, with 1.0M LiPF₆ electrolyte being injected, followed by sealing, standing and formation, obtaining a full battery. The obtained full battery is subjected to the following performance tests.

### 3) Capacity retention rate after 300 cycles

Determination method: the full battery is placed in a 45°C constant temperature box, first charged to 4.25V at a constant current of 0.2C, then charged at a constant voltage of 4.25V until a cut-off current is 0.05C; after standing for 5min, the full battery is discharged at a constant current of 0.2C to 2.8V, and the initial capacity al of the battery is recorded; then a charge and discharge cycle of 0.2C charge/0.2C discharge is performed, and after 300 cycles, the capacity a2 of the battery is recorded, and the capacity retention rate is a2/a1 × 100%. Where, 1C = 200mA/g.

The test results of the above performance are listed in Table 1.

**Table 1**

| | A | B | C | Mass concentration of a first doping element at a grain boundary in a surface layer of a secondary particle | Mass concentration of the first doping element in primary crystal grains in the surface layer of the secondary particle | Discharge capacity /(InAh/g) | Initial Coulombic efficiency /% | Capacity retention rate after 300 cycles /% |
|---|---|---|---|---|---|---|---|---|
| Example 1 | 0.292 | 0.124 | 0.152 | 0.251% | 0.157% | 216.8 | 90.83 | 92.04 |
| Example 2 | 0.280 | 0.114 | 0.143 | 0.137% | 0.0985% | 219.5 | 90.64 | 90.83 |
| Example 3 | 0.268 | 0.104 | 0.139 | 0.223% | 0.135% | 218.6 | 90.73 | 91.12 |
| Example 4 | 0.302 | 0.132 | 0.152 | 0.236% | 0.151% | 216.2 | 90.44 | 90.92 |
| Example 5 | 0.316 | 0.138 | 0.186 | 0.248% | 0.149% | 217.9 | 90.45 | 90.38 |
| Example 6 | 0.278 | 0.115 | 0.135 | 0.235% | 0.168% | 216.6 | 90.72 | 90.79 |
| Comparative Example 1 | 0.0858 | 0.0853 | 0.0861 | 0.0653% | 0.0706% | 212.8 | 88.91 | 85.12 |
| Comparative Example 2 | 0.0841 | 0.0849 | 0.0850 | - | - | 211.2 | 89.33 | 86.53 |
| Comparative Example 3 | 0.0839 | 0.0842 | 0.0841 | 0.205% | 0.183% | 205.9 | 85.01 | 70.15 |

From the data in Table 1, it can be seen as follows.
1) For the high-nickel positive electrode materials of Examples 1 to 6, the A values are all greater than the B values and the C values, and the mass concentration of the first doping element at the grain boundary is higher. These materials can all enable the battery to have higher discharge capacity, initial Coulombic efficiency and capacity retention rate.
2) By comparing Example 1 with Comparative Examples 1 and 3, it can be seen that when the high-nickel positive electrode materials have the same chemical composition but the pre-sintering step is not performed or the pre-sintering temperature is too high, the distributions of cobalt element and nickel element, are similar at the grain boundary in the surface layer of the secondary particle, at the grain boundary in the core of the secondary particle, and in the primary crystal grains. Moreover, the discharge capacity, initial Coulombic efficiency and capacity retention rate of the batteries obtained using the high-nickel positive electrode materials of Comparative Examples 1 and 3 are all poor.
3) By comparing Example 1 with Comparative Example 2, it can be seen that when no high-valent metal element with a valence higher than +5 is added for doping in the primary sintering, the concentration distributions of cobalt element and nickel element are similar at the grain boundary in the surface layer of the secondary particle, at the grain boundary in the core of the secondary particle, and in the primary crystal grains. The battery obtained using the high-nickel positive electrode material of Comparative Example 2 has significantly worse discharge capacity, initial Coulombic efficiency and capacity retention rate than the battery obtained using the high-nickel positive electrode material of Example 1.

Finally, it should be noted that the above embodiments are only used to illustrate the technical solutions of the present application, rather than to limit them. Although the present application has been described in detail with reference to the aforementioned embodiments, those skilled in the art should understand that they can still modify the technical solutions described in the aforementioned embodiments, or equivalently replace some or all of the technical features thereof. However, these modifications or replacements do not cause the essence of the corresponding technical solutions to deviate from the scope of the technical solutions of the embodiments of the present application.

## Claims

1. A high-nickel positive electrode material, wherein the high-nickel positive electrode material is a secondary particle formed by aggregation of primary crystal grains, and a grain boundary is comprised between adjacent primary crystal grains;
a mass ratio of cobalt element to nickel element at a grain boundary in a surface layer of the secondary particle is A, a mass ratio of cobalt element to nickel element at a grain boundary in a core of the secondary particle is B, and a mass ratio of cobalt element to nickel element of the primary crystal grains in the surface layer of the secondary particle is C, wherein A is greater than B, and A is greater than C.

2. The high-nickel positive electrode material according to claim 1, wherein the surface layer of the secondary particle comprises a first doping element, and the first doping element is selected from at least one of metal elements capable of achieving a valence of +5 or higher.

3. The high-nickel positive electrode material according to claim 2, wherein the first doping element is selected from at least one of Ta, Nb, Mo, or W.

4. The high-nickel positive electrode material according to claim 2 or 3, wherein a concentration of the first doping element at the grain boundary in the surface layer of the secondary particle is greater than the concentration of the first doping element of the primary crystal grains in the surface layer of the secondary particle.

5. The high-nickel positive electrode material according to any one of claims 1 to 4, wherein the secondary particle comprises a second doping element, and the second doping element is selected from at least one of Zr, Al, Ti, Mg, Sc, Y, La, Sr, or B.

6. The high-nickel positive electrode material according to any one of claims 1 to 5, wherein a surface of the secondary particle is coated with a coating layer, and the coating layer comprises at least one element of B, Al, Ce, Zr, Ti, or Si.

7. The high-nickel positive electrode material according to any one of claims 1 to 6, wherein the high-nickel positive electrode material has a chemical composition of LiₙNiₓCo_{y}K_{z}MₐN_{b}O₂, wherein 0.95<n<1.1, 0.85≤Ni<1, 0<y≤0.15, 0≤z≤0.15, 0<a≤0.05, 0<b≤0.05; K is selected from Mn or Al; M is selected from at least one of Al, Zr, Y, Ti, Sr, Ce, La, Mg, B, Si, or Sc; N is selected from at least one of Ta, Nb, Mo, W, Sb, Bi, or V.

8. A method for preparing the high-nickel positive electrode material according to any one of claims 1 to 7, comprising the following steps:
1) performing a pre-sintering on a mixed system comprising a high-nickel positive electrode material precursor, a lithium source and a cobalt source under an oxygen-containing atmosphere to obtain a pre-sintered material;
wherein a pre-sintering temperature is 400-600°C and a pre-sintering time is 4-10h;
2) performing a primary sintering on a mixed system comprising the pre-sintered material and a compound of a first doping element under the oxygen-containing atmosphere to obtain a primary sintered material;
wherein the first doping element is selected from at least one of metal elements capable of achieving a valence of +5 or higher; and
a primary sintering temperature is 650-800°C, and a primary sintering time is 8-16h;
3) performing a secondary sintering on the primary sintered product under the oxygen-containing atmosphere to obtain a high-nickel positive electrode material.

9. The preparation method according to claim 8, wherein in step 2), the mixed system further comprises a compound of a second doping element, and the second doping element is selected from at least one of Zr, Al, Ti, Mg, Sc, Y, La, Sr, or B.

10. The preparation method according to claim 8 or 9, wherein in step 3), the secondary sintering comprises: sintering a mixed system of the primary sintered product and a coating agent at 200-500°C for 8-16h;
wherein the coating agent is selected from a compound containing a coating element, and the coating element is selected from at least one of B, Al, Ce, Zr, Ti, or Si.

11. A positive electrode sheet, comprising the high-nickel positive electrode material according to any one of claims 1 to 7.

12. A lithium-ion battery, comprising the positive electrode sheet according to claim 11.
